# EUROPEAN PATENT APPLICATION

(11) **EP 3 270 519 A1**
(43) Date of publication of application: **17.01.2018**
(21) Application number: 16761092.2
(22) Date of filing: 07.03.2016
(51) Int. Cl.: H04B 5/00, H04B 5/02, G07F 7/08, G07F 19/00

(54) **DATA TRANSMISSION METHOD FOR MOBILE NEAR FIELD PAYMENT AND USER EQUIPMENT**

(30) Priority: 11.03.2015 CN 201510105097
(71) Applicant: China Unionpay Co., Ltd, Shanghai 200135 (CN)
(72) Inventor: YIN, Yawei, Shanghai 200135 (CN); FENG, Liang, Shanghai 200135 (CN); LIU, Guobao, Shanghai 200135 (CN); WAN, Sishuang, Shanghai 200135 (CN)
(74) Representative: Seemann & Partner Patentanwälte mbB
(86) International application number: PCT/CN2016/075757
(87) International publication number: WO 2016/141865

(57) **Abstract**

The application discloses a method of data transmission for mobile near-field payment that is performed in a user equipment, comprising: establishing a first communication link based on near-field communication with a POS terminal; after the establishment of the first communication link, establishing a secure channel with the POS terminal, in order to conduct the first interaction related to the transaction request with the POS terminal through the secure channel; establishing a second communication link with the POS terminal, wherein the second communication link has longer communication distance and faster transmission speed compared to the first communication link, and the second communication link is arranged to conduct data transmission in an encryption manner; via the second communication link, the user equipment conducts the second interaction related to the transaction reply with the POS terminal. The application also discloses a user equipment for mobile near-field payment.

## Description

### Related applications

This application is a translation of the international application PCT/CN2016/075757 filed on March 07, 2016, which in turn claims priority from the Chinese application with the official file number 201510105097.7, filed on March 11, 2015. The entire contents of both applications are incorporated herein by reference.

### FIELD OF THE INVENTION

The present invention relates to the field of electronic information technology, and particularly, to a method and apparatus for data transmission of mobile near-field payment.

### BACKGROUND

The mobile near-field payment refers to paying by means of a handset or other mobile device. Mobile devices conduct information interaction with merchant's POS terminals using channels such as NFC, infrared, Bluetooth and the like. NFC (Near Field Communication) is a well-developed short-distance wireless communication technology. It allows exchanging data between electronic equipment by means of non-contact point-to-point data transmission.

At present, in on-line transaction flow specifications, a user terminal has two interaction processes with a POS terminal, a first interaction (i.e., a transaction request phase) includes operations such as application selection, application initialization, reading application data, generating dynamic application ciphertext and the like. After the POS terminal finishes operations with a background payment system, it performs second interaction (i.e., transaction reply phase), which includes operations such as validating ARPC ciphertext, sending script execution notification, performing script and the like. In case of payment based on NFC mobile near-field, since the NFC sensing distance is limited, in an on-line transaction, in order to finish two interactions described above, a user equipment needs to keep close to a POS terminal, and in extreme cases, the duration may be several tens of seconds.

Additionally, due to a lack of rapid data transmission channel, after the transaction is finished, the user terminal cannot receive the pushed electronic ticket information in time.

### SUMMARY OF THE INVENTION

To solve the above-mentioned problems, the technical solution of the application suggests that a second communication link is established by means of other network communication approaches with longer communication distance and faster transmission speed (e.g., WIFI, Bluetooth, etc.), to finish the second interaction with the POS terminal. In this way, the user equipment approaches the POS terminal only once, to finish the payment transaction.

Meantime, the network transmission speed of the second communication link is faster, which is helpful for a related value-added service system to push the ticket information such as electronic signed purchase order, electronic receipt, credential, coupon and the like, further improving the user payment experience. The information pushing approach is applicable to both on-line transaction flow and off-line transaction flow.

According to an aspect of the application, there is provided a method of data transmission for mobile near-field payment that is performed in a user equipment, the method includes: establishing a first communication link based on near-field communication with a POS terminal; after the establishment of the first communication link, establishing a secure channel with the POS terminal, in order to conduct the first interaction related to the transaction request with the POS terminal through the secure channel; establishing a second communication link with the POS terminal, wherein the second communication link has longer communication distance and faster transmission speed compared to the first communication link, and the second communication link is arranged to conduct data transmission in an encryption manner; via the second communication link, the user equipment conducts the second interaction related to the transaction reply with the POS terminal.

In the above method, the first interaction conducted between the user equipment and the POS terminal includes one or more of the following operations: application selection, application initialization, reading application data, and generating dynamic application ciphertext.

In the above method, the second interaction conducted between the user equipment and the POS terminal includes one or more of the following operations: validating ARPC ciphertext, sending script execution notification, and performing script.

The above method may also include: after the establishment of the second communication link, the user equipment is configured to start a timer, while disconnecting the first communication link based on near-field communication with the POS terminal.

The above method may also include: through the second communication link, receiving the pushed electronic ticket from the value-added service system via the POS terminal.

The above method may also include: after receipt of the electronic ticket and upon detection of the POS terminal actively disconnecting the second communication link, releasing resources associated with the second communication link.

In the above method, when the timer reaches a predetermined threshold, the user equipment actively disconnects the second communication link with the POS terminal.

In the above method, the user equipment is configured to use an asymmetric encryption algorithm to encrypt data for transmission on the second communication link.

In the above method, the second communication link is WiFi link or Bluetooth link.

According to another aspect of the application, there is provided a user equipment for mobile near-field payment, comprising: a secure application configured to establish a first communication link based on near-field communication with a POS terminal; and a second communication module configured to establish a second communication link with the POS terminal, the second communication link has longer communication distance and faster transmission speed compared to the first communication link, and the second communication link is arranged to conduct data transmission in an encryption manner, wherein, after the establishment of the first communication link, the secure application is configured to establish a secure channel with the POS terminal, in order to conduct a first interaction related to a transaction request with the POS terminal through the secure channel, and wherein, via the second communication link established by the second communication module, the user equipment conducts a second interaction related to a transaction reply with the POS terminal.

In the above user equipment, the first interaction related to the transaction request includes one or more of the following operations: application selection, application initialization, reading application data, and generating dynamic application ciphertext.

In the above user equipment, the second interaction related to the transaction reply includes one or more of the following operations: validating ARPC ciphertext, sending script execution notification, and performing script.

The above user equipment may also include: a timer, wherein, after the establishment of the second communication link, the timer is started.

In the above user equipment, while the timer is started, the near-field communication module in the user equipment disconnects the first communication link based on near-field communication with the POS terminal.

In the above user equipment, the second communication module is configured to receive the pushed electronic ticket from the value-added service system via the POS terminal.

In the above user equipment, the second communication module is further configured to, after receipt of the electronic ticket, detect whether the POS terminal actively disconnects the second communication link; and if so, release resources associated with the second communication link.

In above user equipment, when the timer reaches a predetermined threshold, the second communication module is configured to actively disconnect the second communication link with the POS terminal.

In above user equipment, the secure module is configured to user an asymmetric encryption algorithm to encrypt data, and further utilizes the second communication link to transmit the encrypted data.

In the above user equipment, the second communication link is WiFi link or Bluetooth link.

Compared to a near-field payment method using only NFC channel, the technical solution of the application uses the second communication link with longer communication distance and faster transmission speed, and takes less time for data transmission. Upon the processing of an on-line transaction, a user equipment needs to approach a POS terminal only once to finish the payment, improving user operation experience. Meantime, by the second communication link pushing the ticket information, such as electronic signed purchase order, electronic receipt, credential, coupon and the like, to the user equipment, the problem regarding electronic ticket transmission is solved, further improving user payment experience.

### BRIEF DESCRIPTION OF THE DRAWINGS

Various aspects of the present invention will be readily apparent to those of ordinary skill in the art when embodiments of the present invention are read with reference to the accompanying drawings. It should be understood by those of ordinary skill in the art that these accompanying drawing are used only to illustrate technical solutions of the present invention in conjunction with embodiments, and are not intended to limit the claimed scope of the present invention.
Fig. 1 is a scene view of an entire system comprising a user equipment, a POS terminal, a backend payment system and a value-added service system according to one embodiment of the application;
Fig. 2 is a system flow diagram according to one embodiment of the application.

### DETAILED DESCRIPTION OF THE INVENTION

What is introduced below is some of possible embodiments of the present invention, aiming to provide a basic understanding of the present invention and not to identify the key or deterministic element or define the claimed scope. It is readily appreciated that other implementations that may be replaced with each other may be advised by those of ordinary skill in the art according to technical solutions of the present invention, without altering the essential spirit of the present invention. Therefore, the following embodiments and accompanying drawings are only illustrative of technical solutions of the present invention, and should not be regarded as the entirety of the present invention or as definition or limitation of technical solutions of the present invention.

According to one aspect of the application, there is provided a user equipment for mobile near-field payment, comprising: a secure application configured to establish a first communication link based on near-field communication with a POS terminal; and a second communication module configured to establish a second communication link with the POS terminal, the second communication link has longer communication distance and faster transmission speed compared to the first communication link, and the second communication link is arranged to conduct data transmission in an encryption manner, wherein, after the establishment of the first communication link, the secure application is configured to establish a secure channel with the POS terminal, in order to conduct a first interaction related to a transaction request with the POS terminal through the secure channel, and wherein, via the second communication link established by the second communication module, the user equipment conducts a second interaction related to a transaction reply with the POS terminal.

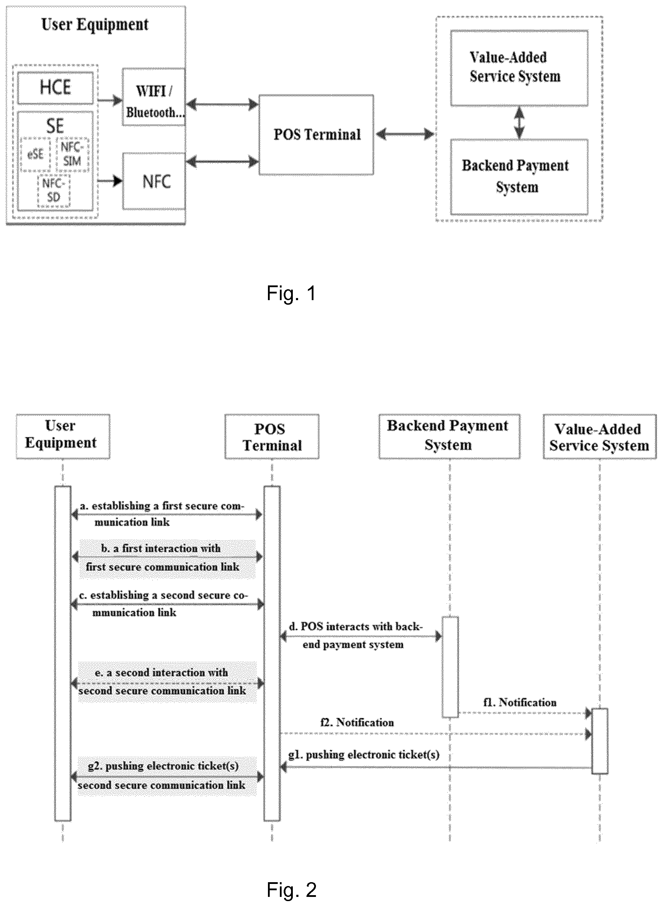

Fig. 1 is a particular scene view of a system according to one embodiment of the application. As can be seen from Fig. 1, the entire system includes a user equipment, a POS terminal, a backend payment system and a value-added service system. Wherein a secure element SE in the user equipment is to provide a secure storage and running environment for sensitive information such as card application, IC card personalized information, key and the like, and the implementation scheme of SE may employ technologies such as eSE, NFC-SIM, NFC-SD and the like. Or HCE (Host-based Card Emulation) technical simulation card program is employed. The user equipment may also include a NFC and second communication module (WIFI, Bluetooth or other communication technologies). In order to communicate with the user equipment, the POS terminal is similarly equipped with NFC and WIFI communication functions (or other communication technologies such as Bluetooth). Additionally, the backend payment system is responsible for payment operation, and the value-added service system is responsible for pushing the ticket information such as electronic signed purchase order, electronic receipt, credential, coupon and the like.

Referring now to Fig. 2, which shows a flow diagram according to one embodiment of the application. Particularly, in Step a, a user holding a user equipment approaches a POS terminal, enters the NFC sensing range, and establishes a first communication link based on NFC with the POS terminal. Next, as illustrated in Step b, after the establishment of the first communication link is finished, the POS terminal establishes a secure channel, and then interacts, with SE (or HCE), comprising operations such as application selection, application initialization, reading application data, generating dynamic application ciphertext and the like. In Step c, the user equipment establishes a second communication link (e.g., WIFI, Bluetooth, etc.). The link conducts data transmission in an encryption manner, there are a number of ways to establish the communication link, for example, the user equipment and the POS terminal hold public and private keys, and use an asymmetric encryption algorithm to encrypt transmission data. Next, as illustrated in Step d, the POS terminal forwards payment information to, and interacts with, the backend payment system.

In one preferred embodiment, after the establishment of the second communication link is finished, the user terminal starts a timer. Meantime, the user equipment and the POS terminal disconnect the first communication link based on NFC, and the user equipment prompts "The user equipment may leave the POS terminal". In another preferred embodiment, in the process of leaving the POS terminal, the user equipment shows signal intensity of the second communication link. It is prompted that the user maintains the connection of the second communication link and does not leave the range of the second communication connection.

In Step e, after the POS terminal finishes the interaction with the backend payment system, it conducts a second interaction, such as validating ARPC ciphertext, constituting script and the like, with the user equipment through the second communication link, so as to finish remaining payment flow. Thus far, the remainder of the payment flow ends. If it is an off-line transaction, this step may be omitted.

Subsequent processing steps may also include: the backend payment system informs the value-added service system (as shown in Step f1) to, or the POS terminal informs the value-added service system (as shown in Step f2) to, push the ticket information such as electronic signed purchase order, electronic receipt, credential, coupon and the like to the user equipment. The ticket information is pushed to the user equipment (as shown in Step g2) from the value-added service system through the second communication link via the POS terminal (as shown in Step g1).

After finishing the receipt of the ticket information, the POS terminal actively disconnects the second communication link. When the user terminal detects the closure of the communication link, it releases related resources. Optionally, when the user terminal timer reaches a predetermined threshold, and if the second communication link is normal, the user terminal actively disconnects the second communication link and releases related resources, to ensure security.

To summarize the above, in the technical solution of the application, the user equipment first establishes the first communication link with the POS terminal through NFC, finishing the interaction of the transaction request phase. Meantime, with the use of other network communication approaches (e.g., WIFI, Bluetooth, etc.) with longer communication distance and faster transmission speed, the second communication link is established. After the POS terminal finishes the interaction with the backend payment system, the POS terminal finishes the interaction of the transaction reply phase with the user terminal through the second communication link, finally finishing the payment transaction flow. After the payment flow is finished, the related value-added service system pushes ticket information such as electronic signed purchase order, electronic receipt, credential, coupon and the like to the user equipment through the second communication link.

The solution has the following advantages of:
1) Upon the process of an on-line transaction, a user equipment needs to approach a POS terminal only once to finish the payment transaction, improving user operation experience;
2) The second communication link has faster data transmission speed, and takes less time;
3) By the second communication link pushing the ticket information, such as electronic purchase order, electronic receipt, credential, coupon and the like, to the user equipment, the problem regarding electronic ticket transmission is solved, further improving user payment experience.

The embodiments of the present invention are described above with reference to accompanying drawings. However, those of ordinary skill in the art can be appreciated that various alterations and substitutions may be made to the embodiments of the present invention without departing from the spirit and scope of the present invention. These alterations and substitutions will fall within the scope of the present invention as defined by the appended claims.

## Claims

1. A method of data transmission for mobile near-field payment that is performed in a user equipment, the method includes:
establishing a first communication link based on near-field communication with a POS terminal;
after the establishment of the first communication link, establishing a secure channel with the POS terminal, in order to conduct a first interaction related to a transaction request with the POS terminal through the secure channel;
establishing a second communication link with the POS terminal, wherein, compared to the first communication link, the second communication link has longer communication distance and faster transmission speed, and the second communication link is arranged to conduct data transmission in an encryption manner,
via the second communication link, the user equipment conducts a second interaction related to the transaction reply with the POS terminal.

2. The method according to claim 1, wherein the first interaction conducted between the user equipment and the POS terminal includes one or more of the following operations: application selection, application initialization, reading application data, and generating dynamic application ciphertext.

3. The method according to claim 1, wherein the second interaction conducted between the user equipment and the POS terminal includes one or more of the following operations: validating ARPC ciphertext, sending script execution notification, and performing script.

4. The method according to claim 1, further comprising: after the establishment of the second communication link, the user equipment is configured to start a timer, while disconnecting the first communication link based on near-field communication with the POS terminal.

5. The method according to claim 1, further comprising: through the second communication link, receiving the pushed electronic ticket from the value-added service system via the POS terminal.

6. The method according to claim 5, further comprising: after receipt of the electronic ticket and upon detection of the POS terminal actively disconnecting the second communication link, releasing resources associated with the second communication link.

7. The method according to claim 4, wherein, when the timer reaches a predetermined threshold, the user equipment actively disconnects the second communication link with the POS terminal.

8. The method according to claim 1, wherein, the user equipment is configured to use an asymmetric encryption algorithm to encrypt data for transmission on the second communication link.

9. The method according to claim 1, wherein the second communication link is a WiFi link or a Bluetooth link.

10. A user equipment for mobile near-field payment, comprising:
a secure application configured to provide a secure storage and running environment for sensitive information;
a near-field communication module configured to establish the first communication link based on near-field communication with the POS terminal; and
a second communication module configured to establish the second communication link with the POS terminal, the second communication link has longer communication distance and faster transmission speed compared to the second communication link, and the second communication link is arranged to conduct data transmission in an encryption manner,
wherein, after the establishment of the first communication link, the secure application is configured to establish a secure channel with the POS terminal, in order to conduct a first interaction related to a transaction request with the POS terminal through the secure channel,
and wherein, via the second communication link established by the second communication module, the user equipment conducts a second interaction related to the transaction reply with the POS terminal.

11. The user equipment according to claim 10, wherein the first interaction related to the transaction request includes one or more of the following operations: application selection, application initialization, reading application data, and generating dynamic application ciphertext.

12. The user equipment according to claim 10, wherein the second interaction related to the transaction reply includes one or more of the following operations: validating ARPC ciphertext, sending script execution notification, and performing script.

13. The user equipment according to claim 10, further comprising a timer, wherein, after the establishment of the second communication link, the timer is started.

14. The user equipment according to claim 13, wherein, while the timer is started, the near-field communication module in the user equipment disconnects the first communication link based on near-field communication with the POS terminal.

15. The user equipment according to claim 10, wherein the second communication module is configured to receive the pushed electronic ticket from the value-added service system via the POS terminal.

16. The user equipment according to claim 15, wherein the second communication module is further configured to, after receipt of the electronic ticket, detect whether the POS terminal actively disconnects the second communication link; and if so, release resources associated with the second communication link.

17. The user equipment according to claim 13, wherein, when the timer reaches a predetermined threshold, the second communication module is configured to actively disconnect the second communication link with the POS terminal.

18. The user equipment according to claim 10, wherein the secure module is configured to user an asymmetric encryption algorithm to encrypt data, and further utilizes the second communication link to transmit the encrypted data.

19. The user equipment according to claim 10, wherein the second communication link is a WiFi link or a Bluetooth link.
